# FASCICULE DE BREVET EUROPEEN

(11) **EP 4 124 942 B1**
(45) Date de publication et mention de la délivrance du brevet: **18.06.2025**
(21) Numéro de dépôt: 22187622.0
(22) Date de dépôt: 28.07.2022
(51) Int. Cl.: G06F 7/02, H04L 9/00

(54) **PROCÉDÉ ET SYSTÈME DE TRAITEMENT DE DONNÉES PERSONNELLES UTILISANT UN CHIFFREMENT HOMOMORPHIQUE**
VERFAHREN UND SYSTEM ZUR VERARBEITUNG VON PERSÖNLICHEN DATEN UNTER VERWENDUNG VON HOMOMORPHIC VERSCHLÜSSELUNG
METHOD AND SYSTEM FOR PROCESSING PERSONAL DATA USING HOMOMORPHIC ENCRYPTION

(30) Priorité: 28.07.2021 FR 2108193
(43) Date de publication de la demande: 01.02.2023
(73) Titulaire: IDEMIA Public Security France, 92400 Courbevoie (FR)
(72) Inventeur: CHABANNE, Hervé, 92400 COURBEVOIE (FR); DESPIEGEL, Vincent, 92400 COURBEVOIE (FR)
(74) Mandataire: IPS

(56) Documents cités:
- US-A1- 2020 228 341
- US-B1- 8 515 058
- KIM TAEYUN ET AL: "Efficient Privacy-Preserving Fingerprint-Based Authentication System Using Fully Homomorphic Encryption", vol. 2020, 13 February 2020 (2020-02-13), pages 1 - 11, XP055910073, ISSN: 1939-0114, Retrieved from the Internet <URL:https://downloads.hindawi.com/journals/scn/2020/4195852.pdf> DOI: 10.1155/2020/4195852
- CHILLOTTI ILARIA ET AL: "TFHE: Fast Fully Homomorphic Encryption Over the Torus", JOURNAL OF CRYPTOLOGY, SPRINGER US, NEW YORK, vol. 33, no. 1, 25 April 2019 (2019-04-25), pages 34 - 91, XP036987049, ISSN: 0933-2790, [retrieved on 20190425], DOI: 10.1007/S00145-019-09319-X
- CLET PIERRE-EMMANUEL ET AL: "BFV, CKKS, TFHE: Which One is the Best for a Secure Neural Network Evaluation in the Cloud?", 22 July 2021, COMPUTER VISION - ECCV 2020 : 16TH EUROPEAN CONFERENCE, GLASGOW, UK, AUGUST 23-28, 2020 : PROCEEDINGS; [LECTURE NOTES IN COMPUTER SCIENCE ; ISSN 0302-9743], SPRINGER INTERNATIONAL PUBLISHING, CHAM, PAGE(S) 279 - 300, ISBN: 978-3-030-58594-5, XP047603734
- HUSEYIN A INAN ET AL: "Sparse Combinatorial Group Testing for Low-Energy Massive Random Access", ARXIV.ORG, CORNELL UNIVERSITY LIBRARY, 201 OLIN LIBRARY CORNELL UNIVERSITY ITHACA, NY 14853, 15 November 2017 (2017-11-15), XP081288528

## Description

### DOMAINE DE L'INVENTION

L'invention concerne un procédé de traitement de données personnelles, pour la comparaison entre une donnée personnelle candidate et une pluralité de données personnelles de référence.

### ETAT DE LA TECHNIQUE

On connaît déjà des schémas d'identification ou d'authentification dans lesquels un utilisateur présente à une unité de traitement digne de confiance, par exemple à une unité appartenant à une douane, un aéroport, etc., une donnée biométrique fraîchement acquise sur l'utilisateur que l'unité confronte à une ou plusieurs donnée(s) biométrique(s) de référence enregistrée(s) dans une base de données à laquelle elle a accès.

Cette base de données regroupe les données biométriques de référence des individus autorisés (tels que les passagers d'un vol avant l'embarquement).

Une telle solution apporte satisfaction, mais pose le problème de la confidentialité de la base de données biométriques de référence pour garantir la vie privée des usagers. Il est ainsi obligatoire de chiffrer cette base de données.

Pour éviter toute manipulation en clair des données biométriques, on peut utiliser un chiffrement homomorphe et réaliser les traitements sur les données biométriques (typiquement calculs de distance) dans le domaine chiffré. Un système cryptographique homomorphe permet en effet d'effectuer certaines opérations mathématiques sur des données préalablement chiffrés au lieu des données en clair. Ainsi, pour un calcul donné, il devient possible de chiffrer les données, faire certains calculs associés audit calcul donné sur les données chiffrées, et les déchiffrer, en obtenant le même résultat que si l'on avait fait ledit calcul donné directement sur les données en clair.

Le problème est que les calculs dans le domaine chiffré sont lourds d'un point de vue calculatoire.

Dans le chiffrement totalement homomorphe (FHE, Fully Homomorphic Encryption), et par exemple Fast Fully Homomorphic Encryption Over the Torus (TFHE) voir par exemple le document *Programmable Bootstrapping Enables Efficient Homomorphic Inference of Deep Neural Networks, Ilaria Chillotti, Marc Joye, Pascal Paillier,* on distingue 2 types d'opérations :
- celles appelées leveled et qui sont rapides ; par exemple, l'addition ou la multiplication par une constante,
- celles qui sont dites bootstrapped et qui sont significativement plus lentes ; par exemple la comparaison, qui prennent plusieurs dizaines de fois plus de temps que les opérations leveled, de sorte que les opération leveled (et de façon générale toutes les opération « non bootstrapped ») sont aujourd'hui en pratique négligées devant les opérations bootstrapped.

Il est connu de l'état de l'art le document:
KIM TAEYUN ET AL: "Efficient Privacy-Preserving Fingerprint-Based Authentication System Using Fully Homomorphic Encryption",SECURITY AND COMMUNICATION NETWORKS,vol. 2020 13 février 2020 (2020-02-13), pages 1-11, XP055910073,ISSN: 1939-0114, DOI: 10.1155/2020/4195852 Extrait de l'Internet:URL:https:// downloads.hindawi.com/journals/scn/2020/4195852.pdf

La comparaison entre une donnée biométrique de référence d'une base et une donnée fraichement capturée dite candidate, peut se faire grâce au calcul d'une distance, en particulier produit scalaire. Et la détermination de l'appartenance à la base, notamment pour son identification, se fait en comparant des scores normalisés à un seuil.

On comprend ainsi que la vérification dans le domaine homomorphe qu'une donnée biométrique candidate appartient à une base de 10000 données biométriques de référence implique 10000 produits scalaires et 10000 comparaisons, ce qui peut prendre plusieurs minutes, une durée inacceptable pour un usage en temps réel.

Si l'on voulait même comparer de manière confidentielle deux bases complètes de 10000 données biométriques de référence (par exemples celles de forces de police de plusieurs états qui coopèrent et qui veulent savoir si des individus se trouvent dans leurs bases de données biométriques respectives sans les divulguer), on aurait alors cent millions de comparaisons à effectuer dans le domaine chiffré, ce qui est hors de portée.

Il serait ainsi souhaitable de disposer d'une solution simple, fiable, sécurisée, et bien plus rapide, d'interrogation d'une base de données.

### PRESENTATION DE L'INVENTION

Selon un premier aspect, l'invention concerne un procédé de traitement de données personnelles, caractérisé en ce que qu'il comprend la mise en œuvre par un système d'étapes de :
(a) Pour chaque donnée personnelle de référence d'une base de données personnelles de référence, calcul dans le domaine chiffré d'un taux de similarité de la donnée personnelle de référence avec une donnée personnelle candidate ; ladite base de données personnelles de référence étant associée à une première partition en une pluralité de premiers ensembles de données personnelles de référence, et à une deuxième partition en une pluralité de deuxièmes ensembles de données personnelles de référence, telles que chaque donnée personnelle de référence d'une base de données personnelles de référence appartient à un unique premier ensemble et un unique deuxième ensemble ;
(b) Pour chaque premier ensemble et chaque deuxième ensemble, calcul dans le domaine chiffré d'un taux de similarité global dudit ensemble en fonction des taux de similarités des données personnelles de référence dudit ensemble ;
(c) Comparaison dans le domaine chiffré de chaque taux de similarité global d'un premier ensemble avec un premier seuil prédéterminé, et de chaque taux de similarité global d'un deuxième ensemble avec un deuxième seuil prédéterminé.

Selon des caractéristiques avantageuses et non limitatives :
L'étape (b) comprend l'application d'une fonction strictement convexe aux taux de similarité des données personnelles de référence.

Ladite fonction strictement convexe est une fonction puissance d'ordre supérieur à 1.

Le taux de similarité global d'un ensemble est calculé à l'étape (b) comme la somme des taux de similarités des données personnelles de référence dudit ensemble après application de ladite fonction strictement convexe.

Les première et deuxième partitions sont telles que chaque deuxième ensemble contient une unique donnée de référence de chaque premier ensemble.

Ladite base de données personnelles de référence contient m*n données personnelles de référence, avec m et n deux entiers, et on a n premiers ensemble de m données personnelles de référence et m deuxièmes ensemble de n données personnelles de référence, tels que pour tout j≤n, le j-ème deuxième ensemble contient la j-ème donnée personnelle de référence de chaque premier ensemble.

La donnée personnelle candidate et/ou chaque donnée personnelle de référence est chiffrée de manière homomorphe, en particulier de manière entièrement homomorphe.

Lesdites données personnelles sont des données biométriques

L'étape (a) comprend l'obtention de ladite donnée biométrique candidate à partir d'un trait biométrique en utilisant des moyens d'acquisition biométrique du système.

Ledit taux de similarité de deux données personnelles est calculé à l'étape (a) comme le produit scalaire de ces données personnelles.

L'étape (a) comprend, pour chaque donnée personnelle de référence, le calcul dans le domaine chiffré d'un taux de similarité de la donnée personnelle de référence avec une somme d'au moins deux données personnelles candidates.

Le procédé comprend une étape (d) d'identification d'au moins une donnée personnelle de référence appartenant à la fois à un premier ensemble présentant un taux de similarité global supérieur audit premier seuil et à un deuxième ensemble présentant un taux de similarité global supérieur audit deuxième seuil.

Selon un deuxième aspect, l'invention concerne un système de traitement de données biométriques, caractérisé en ce qu'il est configuré pour la mise en œuvre d'étapes de :
(a) Pour chaque donnée personnelle de référence d'une base de données personnelles de référence, calcul dans le domaine chiffré d'un taux de similarité de la donnée personnelle de référence avec une donnée personnelle candidate ; ladite base de données personnelles de référence étant associée à une première partition en une pluralité de premiers ensemble de données personnelles de référence, et à une deuxième partition en une pluralité de deuxièmes ensembles de données personnelles de référence, telles que chaque donnée personnelle de référence d'une base de données personnelles de référence appartient à un unique premier ensemble et un unique deuxième ensemble ;
(b) Pour chaque premier ensemble et chaque deuxième ensemble, calcul d'un taux de similarité global dudit ensemble en fonction des taux de similarités des données personnelles de référence dudit ensemble ;
(c) Comparaison de chaque taux de similarité global d'un premier ensemble avec un premier seuil prédéterminé, et de chaque taux de similarité global d'un deuxième ensemble avec un deuxième seuil prédéterminé.

Selon un troisième et un quatrième aspect, l'invention concerne un produit programme d'ordinateur comprenant des instructions de code pour l'exécution d'un procédé selon le premier aspect de traitement de données personnelles ; et un moyen de stockage lisible par un équipement informatique sur lequel un produit programme d'ordinateur comprend des instructions de code pour l'exécution d'un procédé selon le premier aspect de traitement de données personnelles.

### DESCRIPTION DES FIGURES

D'autres caractéristiques, buts et avantages de la présente invention apparaîtront à la lecture de la description détaillée qui va suivre, au regard des figures annexées, données à titre d'exemples non limitatifs et sur lesquelles :
- [Fig. 1] La figure 1 représente schématiquement un mode de réalisation préféré d'un système pour la mise en œuvre d'un procédé selon l'invention ;
- [Fig. 2] La figure 2 illustre les étapes d'un mode de réalisation d'un procédé selon l'invention.

### DESCRIPTION DETAILLEE

### Architecture

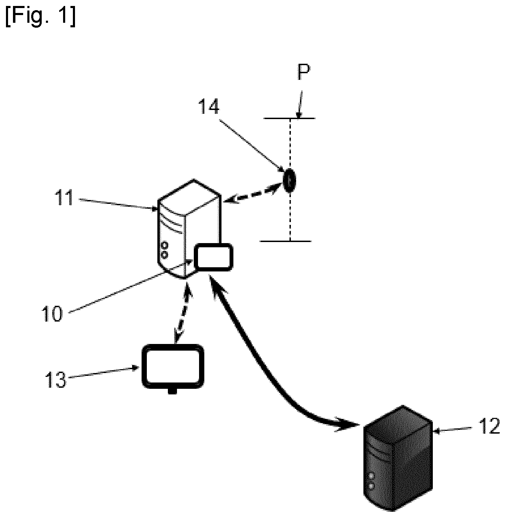

En référence à la **[****Fig. 1****],** on a représenté schématiquement un système 1 de traitement de données personnelles pour la mise en œuvre d'un procédé de traitement de données personnelles en particulier pour l'identification d'individus.

Ce système 1 est un équipement détenu et contrôlé par une entité auprès de qui l'identification doit être effectuée, par exemple une entité gouvernementale, douanière, une société, etc.

Par donnée personnelle, on entend en particulier une donnée biométrique (et on prendra cet exemple dans la suite de la présente description), mais on comprendra qu'il peut s'agir de toute donnée propre à un individu sur la base desquelles on peut authentifier un utilisateur, comme une donnée alphanumérique, une signature, etc.

De manière classique le système 1 comporte un module de traitement de données 11, i.e. un calculateur tel que par exemple un processeur, un microprocesseur, un contrôleur, un microcontrôleur, un FPGA etc. Ce calculateur est adapté pour exécuter des instructions de code pour mettre en œuvre le cas échéant une partie du traitement de données qui sera présenté ci-après.

Le système 1 comprend également un module de stockage de données 12 (une mémoire, par exemple flash) et avantageusement une interface utilisateur 13 (typiquement un écran), et des moyens d'acquisition biométrique 14 (voir plus loin).

Le système 1 peut être disposé localement, mais peut-être séparé en un voire plusieurs serveurs distants hébergeant les composants électroniques (modules 11, 12) connectés aux moyens d'acquisition biométrique 14 qui eux doivent nécessairement rester sur site (au niveau d'un portique pour du contrôle d'accès). Dans l'exemple de la figure 1, le module de stockage 12 est distant.

Dans le mode de réalisation préféré biométrique, le système 1 est capable de générer une donnée biométrique dite candidate à partir d'un trait biométrique d'un individu. Le trait biométrique peut par exemple être la forme du visage, un ou plusieurs iris de l'individu, une empreinte digitale, etc. L'extraction de la donnée biométrique est mise en œuvre par un traitement de l'image du trait biométrique qui dépend de la nature du trait biométrique. Des traitements d'images variés pour extraire des données biométriques sont connus de l'Homme du Métier, par exemple un codage via un réseau de neurones à convolution (CNN). A titre d'exemple non limitatif, l'extraction de la donnée biométrique peut comprendre une extraction de points particuliers, d'une forme du visage dans le cas où l'image est une image du visage de l'individu, ou d'une carte de caractéristiques.

**Les moyens** d'acquisition biométrique 14 consistent à ce titre typiquement en un capteur d'image, par exemple un appareil photographique numérique ou une caméra numérique, adapté pour acquérir au moins une image d'un trait biométrique d'un individu, voir plus loin.

De manière générale, on aura toujours au moins une donnée personnelle candidate et une pluralité de données personnelles de référence à comparer (i.e. chaque donnée personnelle candidate doit être comparée avec chaque donnée personnelle de référence), si on utilise des données personnelles alphanumériques la donnée candidate peut-être tout simplement saisie sur les moyens 13 ou par exemple obtenue par lecture optique à partir d'une image.

Le module de stockage de données 12 stocke ainsi une base de données personnelles de référence, c'est-à-dire une pluralité de données personnelles « attendues » d'une pluralité d'individus connus.

Chaque donnée personnelle de référence peut être avantageusement une donnée enregistrée dans un document d'identité de l'individu. Par exemple, la donnée personnelle peut être la donnée biométrique obtenue à partir d'une image du visage figurant sur un document d'identité (par exemple un passeport), ou encore d'une image (ou directement la donnée biométrique extraite, i.e. le template) du visage, d'au moins un iris ou d'au moins une empreinte digitale, de l'individu, enregistré dans une puce radiofréquence contenue dans le document.

Comme l'on verra, on suppose que la donnée personnelle candidate et/ou les données personnelles de référence sont chiffrées de manière homomorphe, en particulier de manière totalement homomorphe (FHE, Fully Homomorphic Encryption).

On rappelle qu'un système cryptographique homomorphe permet d'effectuer certaines opérations mathématiques sur des données préalablement chiffrés au lieu des données en clair. Ainsi, pour un calcul donné, il devient possible de chiffrer les données, faire certains calculs associés audit calcul donné sur les données chiffrés, et les déchiffrer, en obtenant le même résultat que si l'on avait fait ledit calcul donné directement sur les données en clair.

On utilise par exemple les chiffrements Brakerski-Gentry-Vaikuntanathan (BGV), Cheon-Kim-Kim-Son (CKKS), Fast Fully Homomorphic Encryption Over the **Torus (TFHE)** ou encore Brakerski/Fan-Vercauteren (BFV) qui sont totalement homomorphes.

Dans un mode de réalisation, le système 1 met en œuvre une identification de l'individu, c'est-à-dire compare la donnée personnelle candidate (fraichement acquise sur l'individu dans le cas d'une donnée biométrique, ou sinon simplement demandée à l'individu si c'est une donnée alphanumérique par exemple) à toutes les données personnelles de référence de ladite base, afin de déterminer l'identité de l'individu. On se distingue d'une authentification, dans lequel on ne comparerait la donnée personnelle candidate qu'à une seule personnelle de référence, censée provenir du même individu, afin de vérifier que l'individu à partir duquel ont été obtenues les deux données est bien le même.

Le système 1 peut enfin comprendre des moyens de contrôle d'accès (par exemple une porte automatique P dans la figure 1) commandés en fonction du résultat de l'identification : si un utilisateur autorisé est reconnu, l'accès est autorisé. Lesdits moyens d'acquisition biométrique 14 peuvent être directement montés sur lesdits moyens de contrôle d'accès.

Selon un autre mode de réalisation, le système 1 met en œuvre une comparaison de bases de données, i.e. ladite base de données personnelles de référence est dite « première base », et on a une base de données personnelles candidates, dite « deuxième base ». Par « comparaison des bases de données », on entend comme expliqué la comparaison de leurs éléments, en particulier en vue de déterminer (et le cas échéant l'identifier) si au moins un élément est présent à la fois dans la première base et la deuxième base. En d'autres termes, de manière préférée le résultat de ladite de comparaison est l'intersection des première et deuxième bases. La deuxième base peut être fournie directement chiffrée de manière homomorphe au système 1, ou bien stockée sur des moyens 12 supplémentaires.

### Principe

Plutôt que comparer les scores au seuil, un par un (opération bootstrapped dans le domaine chiffré), la présente invention propose d'utiliser une méthode dite de pool testing et de tester plusieurs scores en même temps. Par analogie, si l'on veut identifier une lampe défectueuse sur une guirlande, on peut tester des groupes de lampe en même temps plutôt que chaque lampe indépendamment.

Suivant ce principe de pool testing, si tous les scores testés sont amenés à des comparaisons négatives (i.e. « pas de match ») alors leur comparaison collective sera également négative et coûtera in fine seulement une comparaison.

Pour appliquer le pool testing à une base de données personnelles, on associe ladite base de données personnelles de référence à une double partition :
- une première partition en une pluralité de premiers ensemble de données personnelles de référence, et
- une deuxième partition en une pluralité de deuxièmes ensembles de données personnelles de référence,

Naturellement, on a moins de premiers ensemble et de deuxième ensembles que le nombre de données personnelles de référence de la base (i.e. au moins un premier ensemble et au moins un deuxième ensemble contient au moins deux données personnelles de référence), et préférentiellement chaque premier ensemble et/ou chaque deuxième ensemble contient au moins deux données personnelles de référence.

Les premières et deuxième partitions sont telles que chaque donnée personnelle de référence d'une base de données personnelles de référence appartient à un unique premier ensemble et un unique deuxième ensemble, i.e. chaque donnée personnelle de référence d'une base de données personnelles de référence est entièrement définie par une paire d'un premier et d'un deuxième ensemble, qui représentent des « coordonnées » de la donnée personnelle de référence.

Inversement, les première et deuxième partitions sont avantageusement telles que chaque deuxième ensemble contient une unique donnée personnelle de référence de chaque premier ensemble. En d'autres termes, chaque paire d'un premier ensemble et d'un deuxième ensemble présente une intersection non vide et comprenant une unique donnée personnelle de référence de la base. Cela permet d'être sûr de que la fonction qui associe à une donnée personnelle de référence de la base la paire d'un premier ensemble et d'un deuxième ensemble qui le contienne est bijective (existence et unicité de la paire).

On connait de nombreux schémas de partition permettant d'arriver à ces propriétés, mais à titre d'exemple préféré, si ladite base de données personnelles de référence contient m*n données personnelles de référence, avec m et n deux entiers (par exemple 100*100 pour une base de 10000 éléments), on a n premiers ensemble de m données personnelles de référence et m deuxièmes ensemble de n données personnelles de référence, tels que pour tout j≤m (j∈[[1 ; m]]), le j-ème deuxième ensemble contient la j-ème donnée personnelle de référence de chaque premier ensemble.

Incidemment, pour tout i≤n (i∈[[1 ; n]]), le i-ème premier ensemble contient la i-ème donnée personnelle de référence de chaque deuxième ensemble

Mathématiquement on peut représenter dans ce mode de réalisation préféré la base de données personnelles de référence comme une matrice de dimensions n*m, et :
- La i-ème ligne de la matrice est le i-ème premier ensemble ; et
- La j-ème colonne de la matrice est le j-ième deuxième ensemble.

Ainsi chaque donnée personnelle de référence peut être désignée par un couple (i,j) ∈[[1 ; n]]*[[1 ; m]], et notée ref_{i,j}.

### Procédé de traitement de données personnelles

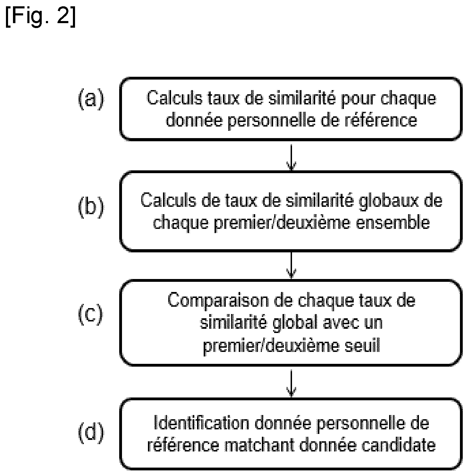

En référence à la **[****Fig. 2****],** le procédé commence par une étape (a), mise en œuvre pour chaque donnée personnelle de référence de la base de données personnelles de référence, de calcul dans le domaine chiffré d'un taux de similarité de la donnée personnelle de référence avec une donnée personnelle candidate. Dans le cas d'une pluralité de données personnelles candidate, le procédé pourra être répété autant de fois qu'il y a de données candidates, ou bien celles-ci pourront être traitées « en batch » (et le procédé répété seulement autant de fois qu'il y a de batchs), voir plus loin.

On suppose que le chiffrement homomorphe a eu lieu avant, sinon les données personnelles sont chiffrées dans l'étape (a). De manière générale, la totalité des étapes du présent procédé auront lieu dans le domaine chiffré de sorte à éviter qu'on puisse remonter aux données personnelles.

Il est important de comprendre que dans le cas d'une identification biométrique la donnée candidate doit être obtenue au pire quelques minutes avant, pour garantir la « fraicheur » de cette donnée candidate.

Comme expliqué, le système 1 comprend en outre avantageusement des moyens d'acquisition biométrique 14 pour l'obtention de ladite donnée biométrique candidate. Généralement, la donnée biométrique candidate est générée par le module de traitement de données 11 à partir d'un trait biométrique fourni par les moyens d'acquisition biométrique 14, mais les moyens d'acquisition biométrique 14 peuvent comprendre leurs propres moyens de traitement et par exemple prendre la forme d'un dispositif automatique fourni par les autorités de contrôle pour extraire la donnée biométrique candidate.

De façon préférée les moyens d'acquisition biométrique 14 sont capable de détecter le vivant, de sorte à s'assurer que la donnée biométrique candidate est issue d'un trait « réel ».

Le calcul de l'étape (a) est le même que dans l'état de la technique. On comprend qu'un individu est considéré identifié si le calcul de l'étape (a) révèle un taux de similarité entre la donnée candidate et une donnée de référence excédant un certain seuil, dont la définition dépend de la distance calculée. On peut obtenir alors une donnée représentative du résultat de ladite comparaison, qui est un résultat d'identification de l'individu, i.e. typiquement un booléen d'appartenance à la base.

Par taux de similarité, on entendra tout score décroissant avec la distance entre la donnée candidate et la donnée de référence. En d'autres termes, le taux de similarité tend vers une valeur maximale (typiquement 1) lorsque la distance entre la donnée candidate et la donnée de référence tend vers 0.

De manière préféré, ledit taux de similarité de deux données personnelles est calculé à l'étape (a) comme le produit scalaire de ces données personnelles (avantageusement normalisé de sorte à être à valeur dans l'intervalle [0 ; 1] - taux de 0 à 100%, même si l'on pourra prendra d'autres intervalles). A noter qu'on pourra également utiliser par exemple un « niveau » discret de similarité pour limiter la quantité d'informations, ou bien une version légèrement bruitée.

Cependant, comme expliqué on évite astucieusement de faire une comparaison de chaque taux de similarité avec le seuil, puisque les comparaisons dans le domaine chiffré sont très couteuses (opérations bootstrapped).

Ainsi dans l'étape (b) on met en œuvre le pool testing, et pour chaque premier ensemble et chaque deuxième ensemble, on calcule dans le domaine chiffré un taux de similarité global dudit ensemble en fonction des taux de similarités des données personnelles de référence dudit ensemble.

Dans l'exemple de la matrice on a donc un taux de similarité global pour chaque ligne et chaque colonne de la matrice, i.e. m+n taux globaux, soit un nombre très inférieur au nombre m*n d'éléments de la base. De plus chaque calcul est peu couteux car on ne fait que des opérations non bootstrapped dans le domaine chiffré.

Pour tester plusieurs taux de similarité ensemble, on propose :
1. de les ajouter, et/ou
2. de leur faire subir une opération individuelle, l'idée étant « d'écraser » (rendre négligeable) les taux de similarité faibles. Le seuil est alors modifié en conséquence.

Ainsi, l'étape (b) comprend avantageusement l'application d'une fonction strictement convexe (sur l'ensemble des valeurs du taux de similarité, en particulier le segment [0 ;1]) aux taux de similarité des données personnelles de référence, ladite fonction strictement convexe est typiquement une fonction puissance d'ordre supérieur à 1, par exemple un carré, mais également par exemple une fonction exponentielle. On rappelle qu'une fonction strictement convexe est une fonction définie sur un intervalle réel I (ici le segment tel que [0 ; 1]), telle que pour tous x et y de l et tout t dans ]0 ; 1[ on a f(t*x+(1-t)*y)<t*f(x)+(1-t)*f(y), ce qui traduit une forme de « creux » de la fonction vue d'au-dessus.

A noter qu'on comprendra qu'inverser les taux de similarité (en prenant par exemple 1- taux de similarité, ou directement la distance) puis leur appliquer une fonction concave reviendrait à leur appliquer une fonction convexe. De façon générale, on vise ici toute opération « renforçant » les scores représentatifs de données personnelles similaires au détriment des scores représentatifs de données personnelles différentes.

De manière préférée, dans le cas d'une fonction puissance, on peut choisir un ordre p de la fonction puissance en fonction de la taille de l'ensemble, par exemple égal à 2*log₁₀ du nombre de données personnelles de référence dans l'ensemble (m ou n), i.e. ordre p=2 pour des ensembles de 10 éléments et ordre p=4 pour des ensembles de 100 éléments, dans le cas d'une biométrie de type visage.

On comprend bien que l'on aurait parfaitement résolu le problème avec la fonction max (mais irréalisable car cela aurait nécessité des opération bootstrapped couteuses). L'idée ici est alors comparable à celle des « normes p » : en notant ∥x∥ₚ = (x₁^{p} + ... + xₙ^{p})^{1/p} (par exemple, ∥x∥₂ est la norme euclidienne, et ||x||- = max(xᵢ), la norme infinie), avec x₁ ... xₙ les données de référence d'un ensemble. Ainsi, plus p augmente, la norme p approche la norme infinie, c'est-à-dire le maximum. L'intuition derrière ce résultat est que plus l'ordre p de la fonction puissance augmente, plus les valeurs petites d'xᵢ sont rendues négligeables par leur élévation à la puissance p alors que seule reste déterminante la valeur maximale.

En résumé, dans le mode de réalisation préféré, l'étape (b) consiste à (1) appliquer, pour chaque donnée personnelle de référence, la fonction puissance d'ordre p au taux de similitude de cette donnée personnelle de référence (soit m*n*p opérations non bootstrapped quand p est un entier positif - car une mise à la puissance revient à faire des multiplications), et (2) sommer, pour chaque premier ou deuxième ensemble, les taux de similitude (après application de la fonction puissance) des données personnelles de référence dudit ensemble (soit m*(n-1)+n*(m-1) opérations non bootstrapped).

Enfin, dans une étape (c), chaque taux de similarité global d'un premier ensemble est comparé avec un premier seuil prédéterminé, et chaque taux de similarité global d'un deuxième ensemble est comparé avec un deuxième seuil prédéterminé. L'existence de deux seuils différents est dû au fait que les premiers et deuxièmes ensembles n'ont pas nécessairement le même nombre d'éléments, mais dans le cas où m=n (100 dans l'exemple) on a avantageusement un seuil commun. Lesdits premier et deuxième seuils sont avantageusement fonction du seuil de base, du nombre d'éléments (m ou n) de l'ensemble, et de la fonction appliquées aux taux de similarités.

Pour déterminer lesdits premier et deuxième seuils, on peut par exemple tracer des courbes FAR (false acceptance rate) et FRR (false rejection rate) pour les comparaisons entre une donnée personnelle candidate et une donnée personnelle de référence à l'échelle d'une base complète (voir plus loin), et procéder de même pour un ensemble : on choisit de manière habituelle (en tant que premier/deuxième seuil) un seuil qui se place à un taux d'acceptance suffisamment faible tout en ayant un taux de probabilité de faux négatif acceptable.

Si une donnée personnelle de référence coïncide avec la donnée personnelle candidate (i.e. leur taux de similarité est au-dessus du seuil), alors le premier ensemble et le deuxième ensemble auxquels cette donnée personnelle de référence appartient auront des taux de similarité globaux respectivement supérieurs au premier et au deuxième seuils (du fait de la présence du taux de similarité élevé - qui n'aurait pas été écrasé par la fonction puissance - dans les sommes correspondantes).

On comprend que dans l'étape (c) on n'a en pratique que m+n comparaisons i.e. m+n opérations bootstrapped, au lieu de m*n, soit 20 fois moins d'opérations bootstrapped si m=n=100

Le procédé comprend préférentiellement une étape (d) d'identification d'au moins une donnée personnelle de référence appartenant à la fois à un premier ensemble présentant un taux de similarité global supérieur audit premier seuil et à un deuxième ensemble présentant un taux de similarité global supérieur audit deuxième seuil, chaque donnée de référence identifiée « matchant » avec la donnée candidate. Si la base de données personnelles de référence est « propre » sans doublon, une donnée candidate matche au plus avec une donnée de référence, de sorte qu'on peut identifier l'individu auquel appartient la donnée candidate comme celui associé avec la donnée de référence matchée. On dispose en effet d'algorithmes de reconnaissance biométrique performants, qui pour un niveau requis de FAR (False acceptation rate) de 10⁻⁶, assurent un taux de FRR (false rejection rate) de l'ordre de 10⁻³.

Enfin, l'étape (d) peut comprendre la mise en œuvre d'un contrôle d'accès en fonction du résultat d'identification de données personnelles de référence matchant la donnée personnelle candidate. En d'autres termes, si l'individu auquel appartient la donnée personnelle candidate a été correctement identifié, il est « autorisé » et d'autres actions comme l'ouverture de la porte automatique P peuvent survenir.

Alternativement, l'étape (d) peut comprendre la détermination de si au moins une donnée personnelle est présente à la fois dans la première base et la deuxième base en fonction du résultat des comparaisons. Plus précisément, si une donnée personnelle candidate (de la deuxième base) coïncide avec une donnée personnelle de référence (de la première base), alors cette donnée personnelle est présente à la fois dans les deux bases. On répète qu'il s'agit de données en particulier biométriques, de sorte qu'on n'aura jamais deux éléments identiques, mais on peut conclure sur le fait qu'il existe un même individu auquel appartient à la fois les données personnelles candidate et de référence qui matchent.

A noter que des stratégies plus sophistiquées peuvent être trouvées, notamment à l'étape (d) en fonction, par exemple, du nombre d'éléments dans la base, du nombre d'éléments maximal que l'on veut avoir dans une somme ou du nombre de match attendus (voir par exemple le document Huseyin A. Inan, Peter Kairouz, Ayfer Ozgür, Sparse Combinatorial Group Testing. IEEE Trans. Inf. Theory 66(5) 2020*.* D'autres paramètres peuvent également pris en compte lors de l'élaboration de ces stratégies.

De façon générale, l'homme du métier pourra suivre des stratégies de pool testing prenant en compte :
- Le nombre de defectives (ici 1 mais sait-on jamais ?)
- Le nombre de données maximal entrant dans un test,
- Si une comparaison renvoie un résultat toujours exact ou peut se tromper,
- Etc.

### Pluralité de données personnelles candidates

Si on a plusieurs données personnelles candidates, et notamment une deuxième base, on peut répéter le procédé pour chaque donnée personnelle candidate.

Pour des raisons opérationnelles (parallélisation des ressources), on peut vouloir procéder suivant le même principe par « batch ». Par exemple, on peut tester l'appartenance à la base de plusieurs données candidates en même temps en jouant sur la linéarité du produit scalaire : en considérant 2 données personnelles candidates en même temps, il est possible alors de calculer les produits scalaires <cand1 + cand2, ref> pour toutes les données personnelles de référence de la base, puisque <cand1 + cand2, ref> = <cand1, ref> + <cand2, ref>. Dans la mesure où la quasitotalités de ces produits scalaires sont proches de 0, on sait que si <cand1 + cand2, ref> > seuil de matching alors soit <cand1 + cand2, ref> ≈ <cand1, ref> soit <cand1 + cand2, ref> ≈ <cand2, ref>, i.e. <cand1, ref> ou <cand2, ref> > seuil, ce qui revient à dire qu'au moins une desdites données candidates testées appartient à la base.

L'étape (a) peut ainsi comprendre avantageusement, pour chaque donnée personnelle de référence, le calcul dans le domaine chiffré d'un taux de similarité de la donnée personnelle de référence avec une somme d'au moins deux données personnelles candidates. En effet, il suffit qu'une donnée candidate appartiennent à la base pour que l'un des scores soit élevé. Si plusieurs des données candidates testées appartiennent à la base, on aura plusieurs premiers ensembles et plusieurs deuxièmes ensembles qui auront des taux globaux de similarité au-dessus des premier/deuxième seuils (étape (d)) : il suffit alors de tester les paires possibles (leur nombre est très réduit) pour savoir la ou lesquelles de la pluralité de données candidates testées appartient bien à la base et l'identifier.

On peut ainsi diviser une éventuelle deuxième base en une pluralité de batchs par exemple d'une dizaine de données personnelles candidates, et mettre en œuvre le procédé autant de fois que de batchs, étant entendu que le nombre de batch reste bien plus faible que le nombre de données candidates.

### Produit programme d'ordinateur

Selon un troisième et un quatrième aspects, l'invention concerne un produit programme d'ordinateur comprenant des instructions de code pour l'exécution (en particulier sur le module traitement de données 11 et/ou le module matériel de sécurité 10 du système 1) d'un procédé selon le premier aspect de l'invention, ainsi que des moyens de stockage lisibles par un équipement informatique (un module de stockage de données 12 du système 1 et/ou un espace mémoire du module matériel de sécurité 10) sur lequel on trouve ce produit programme d'ordinateur.

## Revendications

1. Procédé de traitement de données personnelles, **caractérisé en ce que** qu'il comprend la mise en oeuvre par un système (1) d'étapes de :
(a) Pour chaque donnée personnelle de référence d'une base de données personnelles de référence, calcul dans le domaine chiffré d'un taux de similarité de la donnée personnelle de référence avec une donnée personnelle candidate ; ladite base de données personnelles de référence étant associée à une première partition en une pluralité de premiers ensembles de données personnelles de référence, et à une deuxième partition en une pluralité de deuxièmes ensembles de données personnelles de référence, telles que chaque donnée personnelle de référence d'une base de données personnelles de référence appartient à un unique premier ensemble et un unique deuxième ensemble ; le taux de similarité étant un score décroissant avec la distance entre la donnée personnelle de référence et la donnée personnelle candidate ;
(b) Pour chaque premier ensemble et chaque deuxième ensemble, calcul dans le domaine chiffré d'un taux de similarité global dudit ensemble en fonction des taux de similarités des données personnelles de référence dudit ensemble ;
(c) Comparaison dans le domaine chiffré de chaque taux de similarité global d'un premier ensemble avec un premier seuil prédéterminé, et de chaque taux de similarité global d'un deuxième ensemble avec un deuxième seuil prédéterminé ;
dans lequel la donnée personnelle candidate et/ou chaque donnée personnelle de référence est chiffrée de manière homomorphe, en particulier de manière entièrement homomorphe.

2. Procédé selon la revendication 1, dans lequel l'étape (b) comprend l'application d'une fonction strictement convexe aux taux de similarité des données personnelles de référence.

3. Procédé selon la revendication 2, dans lequel ladite fonction strictement convexe est une fonction puissance d'ordre supérieur à 1.

4. Procédé selon l'une des revendications 2 à 3, dans lequel le taux de similarité global d'un ensemble est calculé à l'étape (b) comme la somme des taux de similarités des données personnelles de référence dudit ensemble après application de ladite fonction strictement convexe.

5. Procédé selon l'une des revendications 1 à 4, dans lequel les première et deuxième partitions sont telles que chaque deuxième ensemble contient une unique donnée de référence de chaque premier ensemble.

6. Procédé selon la revendication 5, dans lequel ladite base de données personnelles de référence contient m*n données personnelles de référence, avec m et n deux entiers, et on a n premiers ensemble de m données personnelles de référence et m deuxièmes ensemble de n données personnelles de référence, tels que pour tout j≤n, le j-ème deuxième ensemble contient la j-ème donnée personnelle de référence de chaque premier ensemble.

7. Procédé selon l'une des revendications 1 à 6, dans laquelle lesdites données personnelles sont des données biométriques.

8. Procédé selon l'une des revendications 1 à 7, dans laquelle ledit taux de similarité de deux données personnelles est calculé à l'étape (a) comme le produit scalaire de ces données personnelles.

9. Procédé selon l'une des revendications 1 à 8, dans laquelle l'étape (a) comprend, pour chaque donnée personnelle de référence, le calcul dans le domaine chiffré d'un taux de similarité de la donnée personnelle de référence avec une somme d'au moins deux données personnelles candidates.

10. Procédé selon l'une des revendications 1 à 9, comprenant une étape (d) d'identification d'au moins une donnée personnelle de référence appartenant à la fois à un premier ensemble présentant un taux de similarité global supérieur audit premier seuil et à un deuxième ensemble présentant un taux de similarité global supérieur audit deuxième seuil.

11. Système de traitement de données biométriques, **caractérisé en ce qu'**il est configuré pour la mise en œuvre d'étapes de :
(a) Pour chaque donnée personnelle de référence d'une base de données personnelles de référence, calcul dans le domaine chiffré d'un taux de similarité de la donnée personnelle de référence avec une donnée personnelle candidate ; ladite base de données personnelles de référence étant associée à une première partition en une pluralité de premiers ensemble de données personnelles de référence, et à une deuxième partition en une pluralité de deuxièmes ensembles de données personnelles de référence, telles que chaque donnée personnelle de référence d'une base de données personnelles de référence appartient à un unique premier ensemble et un unique deuxième ensemble, le taux de similarité étant un score décroissant avec la distance entre la donnée personnelle de référence et la donnée personnelle candidate ;
(b) Pour chaque premier ensemble et chaque deuxième ensemble, calcul d'un taux de similarité global dudit ensemble en fonction des taux de similarités des données personnelles de référence dudit ensemble ;
(c) Comparaison de chaque taux de similarité global d'un premier ensemble avec un premier seuil prédéterminé, et de chaque taux de similarité global d'un deuxième ensemble avec un deuxième seuil prédéterminé ;
dans lequel la donnée personnelle candidate et/ou chaque donnée personnelle de référence est chiffrée de manière homomorphe, en particulier de manière entièrement homomorphe.

12. Produit programme d'ordinateur comprenant des instructions de code pour l'exécution d'un procédé selon l'une des revendications 1 à 10 de traitement de données personnelles, lorsque ledit procédé est exécuté sur un ordinateur.

13. Moyen de stockage lisible par un équipement informatique sur lequel un produit programme d'ordinateur comprend des instructions de code pour l'exécution d'un procédé selon l'une des revendications 1 à 10 de traitement de données personnelles.

## Patentansprüche

1. Verfahren zur Verarbeitung persönlicher Daten, **dadurch gekennzeichnet, dass** es die Durchführung folgender Schritte durch ein System (1) umfasst:
(a) Für jeden persönlichen Bezugsdatensatz einer Datenbank mit persönlichen Bezugsdaten Berechnung in dem verschlüsselten Bereich eines Ähnlichkeitsgrades des persönlichen Bezugsdatensatzes mit einem persönlichen Kandidatendatensatz; wobei die Datenbank mit persönlichen Bezugsdaten einer ersten Aufteilung in eine Vielzahl von ersten Anordnungen persönlicher Bezugsdaten und einer zweiten Aufteilung in eine Vielzahl von zweiten Anordnungen persönlicher Bezugsdaten zugeordnet ist, so dass jeder persönliche Bezugsdatensatz einer Datenbank mit persönlichen Bezugsdaten zu einer einzigen ersten Anordnung und einer einzigen zweiten Anordnung gehört; wobei der Ähnlichkeitsgrad ein Wert ist, der mit zunehmendem Abstand zwischen dem persönlichen Bezugsdatensatz und dem persönlichen Kandidatendatensatz abnimmt;
(b) Für jede erste Anordnung und jede zweite Anordnung Berechnung in dem verschlüsselten Bereich eines Gesamtähnlichkeitsgrades der Anordnung in Abhängigkeit von den Ähnlichkeitsgraden der persönlichen Bezugsdatensätze der Anordnung;
(c) Vergleich in dem verschlüsselten Bereich jedes Gesamtähnlichkeitsgrades einer ersten Anordnung mit einem ersten vorbestimmten Schwellenwert und jedes Gesamtähnlichkeitsgrades einer zweiten Anordnung mit einem zweiten vorbestimmten Schwellenwert;
wobei der persönliche Kandidatendatensatz und/oder jeder persönliche Bezugsdatensatz homomorph, insbesondere vollständig homomorph, verschlüsselt ist.

2. Verfahren nach Anspruch 1, wobei Schritt (b) das Anwenden einer streng konvexen Funktion auf die Ähnlichkeitsgrade der persönlichen Bezugsdaten umfasst.

3. Verfahren nach Anspruch 2, wobei die streng konvexe Funktion eine Potenzfunktion höherer Ordnung als 1 ist.

4. Verfahren nach einem der Ansprüche 2 bis 3, wobei der Gesamtähnlichkeitsgrad einer Anordnung in Schritt (b) als Summe der Ähnlichkeitsgrade der persönlichen Bezugsdaten dieser Anordnung nach Anwendung der streng konvexen Funktion berechnet wird.

5. Verfahren nach einem der Ansprüche 1 bis 4, wobei die erste und die zweite Aufteilung so beschaffen sind, dass jede zweite Anordnung einen einzigen Bezugsdatensatz aus jeder ersten Anordnung enthält.

6. Verfahren nach Anspruch 5, wobei die genannte Datenbank mit persönlichen Bezugsdaten m*n persönliche Bezugsdaten enthält, wobei m und n zwei ganze Zahlen sind, und es n erste Anordnungen von m persönlichen Bezugsdaten und m zweite Anordnungen von n persönlichen Bezugsdaten gibt, so dass für jedes j≤n die j-te zweite Anordnung den j-ten persönlichen Bezugsdatensatz jeder ersten Anordnung enthält.

7. Verfahren nach einem der Ansprüche 1 bis 6, wobei die persönlichen Daten biometrische Daten sind.

8. Verfahren nach einem der Ansprüche 1 bis 7, wobei der Ähnlichkeitsgrad zweier persönlicher Daten in Schritt (a) als Skalarprodukt dieser persönlichen Daten berechnet wird.

9. Verfahren nach einem der Ansprüche 1 bis 8, wobei Schritt (a) für jeden persönlichen Bezugsdatensatz die Berechnung eines Ähnlichkeitsgrades des persönlichen Bezugsdatensatzes mit einer Summe aus mindestens zwei persönlichen Kandidatendaten in dem verschlüsselten Bereich umfasst.

10. Verfahren nach einem der Ansprüche 1 bis 9, umfassend einen Schritt (d) zum Identifizieren mindestens eines persönlichen Bezugsdatensatzes, der sowohl zu einer ersten Anordnung, aufweisend einen Gesamtähnlichkeitsgrad über dem ersten Schwellenwert, als auch zu einer zweiten Anordnung, aufweisend einen Gesamtähnlichkeitsgrad über dem zweiten Schwellenwert, gehört.

11. System zur Verarbeitung biometrischer Daten, **dadurch gekennzeichnet, dass** es zur Durchführung der folgenden Schritte konfiguriert ist:
(a) Für jeden persönlichen Bezugsdatensatz einer Datenbank mit persönlichen Bezugsdaten Berechnung in dem verschlüsselten Bereich eines Ähnlichkeitsgrades des persönlichen Bezugsdatensatzes mit einem persönlichen Kandidatendatensatz; wobei die Datenbank mit persönlichen Bezugsdaten einer ersten Aufteilung in eine Vielzahl von ersten Anordnungen persönlicher Bezugsdaten und einer zweiten Aufteilung in eine Vielzahl von zweiten Anordnungen von persönlichen Bezugsdaten zugeordnet ist, so dass jeder persönliche Bezugsdatensatz einer Datenbank mit persönlichen Bezugsdaten zu einer einzigen ersten Anordnung und einer einzigen zweiten Anordnung gehört, wobei der Ähnlichkeitsgrad ein Wert ist, der mit zunehmendem Abstand zwischen dem persönlichen Bezugsdatensatz und dem persönlichen Kandidatendatensatz abnimmt;
(b) Für jede erste Anordnung und jede zweite Anordnung Berechnung eines Gesamtähnlichkeitsgrades der Anordnung in Abhängigkeit von den Ähnlichkeitsgraden der persönlichen Bezugsdatensätze der Anordnung;
(c) Vergleich jedes Gesamtähnlichkeitsgrades einer ersten Anordnung mit einem ersten vorbestimmten Schwellenwert und jedes Gesamtähnlichkeitsgrades einer zweiten Anordnung mit einem zweiten vorbestimmten Schwellenwert;
wobei der persönliche Kandidatendatensatz und/oder jeder persönliche Bezugsdatensatz homomorph, insbesondere vollständig homomorph, verschlüsselt ist.

12. Computerprogrammprodukt, umfassend Codebefehle zur Ausführung eines Verfahrens nach einem der Ansprüche 1 bis 10 zur Verarbeitung persönlicher Daten, wenn das Verfahren auf einem Computer ausgeführt wird.

13. Von einem IT-Gerät lesbares Speichermedium, auf dem ein Computerprogrammprodukt Codeanweisungen zur Ausführung eines Verfahrens nach einem der Ansprüche 1 bis 10 zur Verarbeitung persönlicher Daten umfasst.

## Claims

1. Method for processing personal data, **characterized in that** it comprises the implementation by a system (1) of steps of:
(a) For each reference personal datum from a reference personal data base, calculating in the encrypted domain a level of similarity between the reference personal datum and a candidate personal datum; said reference personal data base being associated with a first partition into a plurality of first sets of reference personal data, and with a second partition into a plurality of second sets of reference personal data, such that each reference personal datum from a reference personal data base belongs to a unique first set and a unique second set; the level of similarity being a score which decreases the more distance there is between the reference personal datum and the candidate personal datum;
(b) For each first set and each second set, calculating in the encrypted domain an overall level of similarity of said set as a function of the levels of similarities between the reference personal data of said set;
(c) Comparing in the encrypted domain each overall level of similarity of a first set with a first predetermined threshold, and each overall level of similarity of a second set with a second predetermined threshold;
wherein the candidate personal datum and/or each reference personal datum is encrypted in a homomorphic manner, in particular in an entirely homomorphic manner.

2. Method according to Claim 1, wherein step (b) comprises applying a strictly convex function to the levels of similarity between the reference personal data.

3. Method according to Claim 2, wherein said strictly convex function is a power function of an order greater than 1.

4. Method according to either of Claims 2 and 3, wherein the overall level of similarity of a set is calculated in step (b) as the sum of the levels of similarities between the reference personal data of said set after said strictly convex function has been applied.

5. Method according to one of Claims 1 to 4, wherein the first and second partitions are such that each second set contains a unique reference datum of each first set.

6. Method according to Claim 5, wherein said reference personal data base contains m*n reference personal data, with m and n being two integers, and there are n first sets of m reference personal data and m second sets of n reference personal data, such that for every j≤n, the j-th second set contains the j-th reference personal datum of each first set.

7. Method according to one of Claims 1 to 6, wherein said personal data are biometric data.

8. Method according to one of Claims 1 to 7, wherein said level of similarity between two personal data is calculated in step (a) as the scalar product of these personal data.

9. Method according to one of Claims 1 to 8, wherein step (a) comprises, for each reference personal datum, calculating in the encrypted domain a level of similarity between the reference personal datum and a sum of at least two candidate personal data.

10. Method according to one of Claims 1 to 9, comprising a step (d) of identifying at least one reference personal datum belonging both to a first set having an overall level of similarity of greater than said first threshold and to a second set having an overall level of similarity of greater than said second threshold.

11. System for processing biometric data, **characterized in that** it is configured to implement steps of:
(a) For each reference personal datum from a reference personal data base, calculating in the encrypted domain a level of similarity between the reference personal datum and a candidate personal datum; said reference personal data base being associated with a first partition into a plurality of first sets of reference personal data, and with a second partition into a plurality of second sets of reference personal data, such that each reference personal datum from a reference personal data base belongs to a unique first set and a unique second set; the level of similarity being a score which decreases the more distance there is between the reference personal datum and the candidate personal datum;
(b) For each first set and each second set, calculating an overall level of similarity of said set as a function of the levels of similarities between the reference personal data of said set;
(c) Comparing each overall level of similarity of a first set with a first predetermined threshold, and each overall level of similarity of a second set with a second predetermined threshold;
wherein the candidate personal datum and/or each reference personal datum is encrypted in a homomorphic manner, in particular in an entirely homomorphic manner.

12. Computer program product comprising code instructions for executing a method according to one of Claims 1 to 10 for processing personal data, when said method is executed on a computer.

13. Computer-readable storage medium on which a computer program product comprises code instructions for executing a method according to one of Claims 1 to 10 for processing personal data.
